(19) Europäisches Patentamt
European Patent Office
Office européen des brevets

(11) **EP 4 435 462 A1**

(12) **EUROPEAN PATENT APPLICATION**

(43) Date of publication:
**25.09.2024   Bulletin 2024/39**

(21) Application number: **23163814.9**

(22) Date of filing: **23.03.2023**

(51) International Patent Classification (IPC):
**G01S 5/02** $^{(2010.01)}$

(52) Cooperative Patent Classification (CPC):
**G01S 5/02521; G01S 5/0278**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventor: **Martinez Alba, Alberto**
**81379 München (DE)**

(74) Representative: **Siemens Patent Attorneys**
**Postfach 22 16 34**
**80506 München (DE)**

(54) **LOCATION OF A TRANSPONDER WITH A SURROUND AREA SHARED INTO A PLURALITY OF SITES**

(57)     The present invention relates to locating a transponder within a surveillance area of a locating system, wherein each receiver (R1-R8) measures a signal strength of periodic signals from each beacon (B1-B6) and a probability density function (700, 715, 717, 718) of the signal strength is calculated for each beacon. Based on the probability density functions, a confidence interval (71-76) of the signal strength within each section is determined and a signal strength signature (10, 20, 30, 40, 50, 60, 70) is calculated accordingly. Further, a signal strength fingerprint (500) is generated from measurements of the transponder and sections (104, 107) having a signal strength signature (40, 70) matching to the signal strength fingerprint are selected for determining the position of the transponder. The position of the transponder is determined from candidate positions and has a maximum match between the measurements of the transponder and the probability density functions.

FIG 6

EP 4 435 462 A1

**Description**

The present invention relates to a method of locating at least one transponder within a surveillance area, particularly an indoor area, of a locating system, a locating system for carrying out the method, a processing unit for such a locating system and a mobile object including such a processing unit.

Locating devices may be based, for example, on RFID tags (radio-frequency identification) which are attached to objects to be identified or located. RFID tags include a storage unit whose content can be read using an RFID reader and may also be changed by means of the RFID reader. At least one identifier is usually stored in each RFID tag. To read information stored in RFID tags, RFID readers send out a request signal by generating an alternating electromagnetic field. On the one hand, this electromagnetic alternating field is particularly used to supply energy to passively operated RFID tags that do not have their own energy source. On the other hand, the electromagnetic alternating field is modulated by RFID tags to transmit a response signal, for example, by load modulation or by varying their antenna impedance.

Locating systems for industrial automation systems must meet special requirements in terms of reliable data transmission, authenticity of transmitted data, and robustness to potential sources of interference. Since industrial automation systems are used to monitor and control technical processes especially in factory automation systems, process automation systems and building automation systems, faulted, tampered, or incorrectly configured locating systems can have serious effects, in the worst case a standstill of an automation system.

In the older European patent application with the application number 22184622.3, a method for localization of a mobile object in a wireless indoor transmission system having an improved accuracy is described. Improving a spatial accuracy is accomplished by leveraging the use of machine-learning techniques for processing wireless channel condition values by eventually transforming these channel condition values into a respective spatial distribution of estimated radio coverage and uncertainty. A wireless channel condition value may be determined by a signal strength or RSSI (Received Signal Strength Indication), a latency, a throughput measurement, or a channel impulse response. Further, a calculation of an uncertainty indicator is introduced. This indicator is beneficial for improving the accuracy of the positioning and for reporting a confidence level of predicted locations. Using this uncertainty indicator advantageously removes the need for including explicit information about the scenery bounds, since these are automatically considered by high uncertainty values on and beyond the borders of the scenery.

"Improved Wi-Fi RSSI measurement for indoor localization", Xue, Weixing et al., IEEE Sensors Journal 17.7 (2017), page 2224-2230, presents and evaluates a technique for obtaining indoor positioning by means of WiFi signals. Its main feature is a smoothing algorithm that filters out low-power measurements corresponding to non-line of sight conditions, which worsen the overall result. The conversion between signal powers and position is, nonetheless, rather basic since it is based on range estimation, and the evaluation is performed on simplified scenarios.

In "Recurrent neural networks for accurate RSSI indoor localization", Hoang, Minh Tu et al., IEEE Internet of Things Journal 6.6 (2019), page 10639-10651, the use of WiFi received signal strength indicator (RSSI) fingerprinting is described. The RSSI fingerprinting is used in combination with recurrent neural networks, such as long short-term memory algorithms, to accurately predict the location of mobile equipment along a trajectory. However, it cannot be directly used to predict the location of receivers with unknown trajectories.

Indoor positioning is a highly desired feature in many industrial use cases, since it enables enhanced monitoring and task automation, which lead to high production efficiency. However, existing localization deployments based on signal strength measurements struggle so far to provide good localization accuracy, as the signal strength measurements are usually highly variant. Received signal strength indicator (RSSI) fingerprinting aims at mitigating the high variability of the signal strength measurements and at high localization accuracy while keeping deployment costs low. Particularly, being able to adequately process information contained in RSSI fingerprints is a challenging task.

The present invention aims at creating a method of locating at least one transponder within a surveillance area of a locating system which allows for an economic and accurate localization based on signal strength measurements and providing appropriate means for implementing the method.

This problem is solved according to the present invention by means of a method having the features specified in claim 1, by means of a locating system having the features specified in claim 12, by means of a processing unit having the features specified in claim 13 and by means of a mobile object having the features specified in claim 14. Advantageous embodiments of the present invention are specified in the dependent patent claims.

According to the present invention, a method of locating at least one transponder within a surveillance area of a locating system is provided. The locating system comprises a plurality of beacons and receivers being located at known positions. The surveillance area is divided into a plurality of polygon sections, wherein the receivers are located at respective corners of the polygon sections. The method comprises the steps of measuring, by each receiver, a signal strength of periodic signals from each beacon and calculating, for each beacon, a probability density function of the signal strength measured by the receiver. Moreover, the method comprises determining, from the probability density functions, a confidence interval of the signal strength within each section for each beacon and calculating, from the confidence intervals, a signal strength signature for each section.

Preferably, the polygon sections are triangles, and the signal strength signatures are barycentric signatures calculated for each triangle from the probability density functions of the signal strength measured by the respective receivers at each corner of the triangles. Advantageously, the probability density functions are calculated for each receiver and each beacon, wherein the probability density functions associated with the positions of the receivers are interpolated within the triangles using barycentric interpolation. Particularly, when using barycentric interpolation of the probability density functions for a point inside a triangle, a weighted combination of the probability density functions can be calculated based on barycentric coordinates of the point. Thus, the barycentric signatures can provide confidence limits for any point within a triangle. The barycentric signatures can be easily calculated and are less sensitive to influence of distant objects, for example, obstacles being located or moving within the surveillance area and quickly changing, due to their presence, radio propagation conditions when locating the transponder. These effects may frequently occur within indoor scenarios, particularly within plants or process automation systems.

The method according to the present invention further comprises the step of performing, by a transponder to be located, a measurement of the signal strength of the periodic signals from each beacon. Further, the method comprises generating, from the measurements of the transponder, a signal strength fingerprint and selecting the sections having a signal strength signature matching to the signal strength fingerprint. Moreover, the method comprises determining, within each selected section, a candidate position where the transponder is most likely to be located according to the measurements of the transponder and the respective probability density functions. Finally, the method comprises the step of determining, from the candidate positions, a position having a maximum match between the measurements of the transponder and the probability density functions.

The present invention improves the efficiency of finding highly probable candidate positions of a transponder to be located by checking a signal strength fingerprint, particularly an RSSI fingerprint, measured by transponder against a signal strength signature, preferably a barycentric signature. By doing so, a large number of the sections of the surveillance area can be discarded before running an optimization algorithm to determine candidate positions just within a limited number of selected sections. Thus, the present invention allows for using low-cost radio beacons as source of accurate positioning information based signal strength fingerprinting.

According to a preferred embodiment of the present invention, the receivers periodically update their respective measurements of the signal strength of the periodic signals from the beacons, wherein the receivers comprise stationary receivers and/or mobile equipment with known positions and/or moving along known trajectories. Periodically updating the measurements by the receivers reduces an effect of other objects within the surveillance area on propagation paths of the periodic signals from the beacons and further enhances the accuracy when determining the position of the transponder.

In yet another advantageous embodiment of the present invention, the probability density functions are calculated and updated by a processing unit which may be integrated in the transponder or implemented as a central instance of the locating system serving all transponders or mobile equipment. Particularly, the confidence interval of the signal strength within each section is determined by the processing unit considering each receiver in the respective section, wherein the confidence interval comprises a minimum value and a maximum value of the signal strength over all receivers in the respective section. Advantageously, based on the positions of the receivers, the surveillance area is divided into the plurality of polygon sections by the processing unit. Moreover, the signal strength fingerprint is generated preferably by the processing unit from the signal strength measured for each beacon by the transponder. This allows for a fast and efficient signal processing, especially in scenarios with time being a crucial factor.

According to a further advantageous embodiment of the present invention, the sections having a signal strength signature matching to the signal strength fingerprint are selected by the processing unit, wherein the selected sections are candidate areas where the transponder is likely to be located. Particularly, the candidate positions are determined by the processing unit according to the measurements of the transponder for each beacon and the respective probability density functions. On this basis, the processing unit can determine one candidate position per candidate area allowing for an efficient determination of relevant candidate positions.

The locating system according to the present invention is designed for locating at least one transponder within a surveillance area and comprises a plurality of beacons and receivers being located at known positions. The beacons are configured to transmit periodic signals, whereas the receivers are configured to measure a signal strength of the periodic signals from each beacon. Further, the transponder is configured to perform a measurement of the signal strength of the periodic signals from each beacon. Moreover, the locating system comprises means, particularly a processing unit according to the present invention, for calculating, for each beacon, a probability density function of the signal strength measured by the respective receiver and for dividing the surveillance area into a plurality of polygon sections, wherein the receivers are located at respective corners of the polygon sections.

Further, the locating system according to the present invention comprises means, especially the processing unit, for determining, from the probability density functions, a confidence interval of the signal strength within each section for each beacon and calculating, from the confidence intervals, a signal strength signature for each section and for generating, from the measurements of the transponder, a signal strength fingerprint and selecting the sections having a signal strength signature matching to the signal strength fingerprint. Finally, the locating system comprises means, for example the processing unit, for determining, within each selected section, a candidate position where the transponder is most likely to be located according to the measurements of the transponder and the respective probability density functions and for determining, from the candidate positions, a position having a maximum match between the measurements of the transponder and the probability density functions.

The present invention will be explained in more detail with reference to exemplary embodiments illustrated in the attached drawing, in which

Figure 1     shows a schematic diagram of a locating system comprising a plurality of beacons and receivers located at known positions and at least one transponder to be located within a surveillance area;

Figure 2     shows a block diagram of a processing unit for the locating system depicted in Figure 1, the processing unit being in connection with the receivers and the transponder;

Figure 3     shows a representation of determining a confidence interval of a signal strength of periodic signals from a selected beacon within a selected triangle section of the locating system depicted in Figure 1;

Figure 4     shows a representation of calculating a barycentric signature for the selected triangle section from the confidence intervals of the signal strength of the periodic signals from all beacons;

Figure 5     shows a representation of selecting triangle sections having a barycentric signature matching to a signal strength fingerprint generated from measurements of the transponder;

Figure 6     shows a flowchart of method steps according to a preferred embodiment of the present invention.

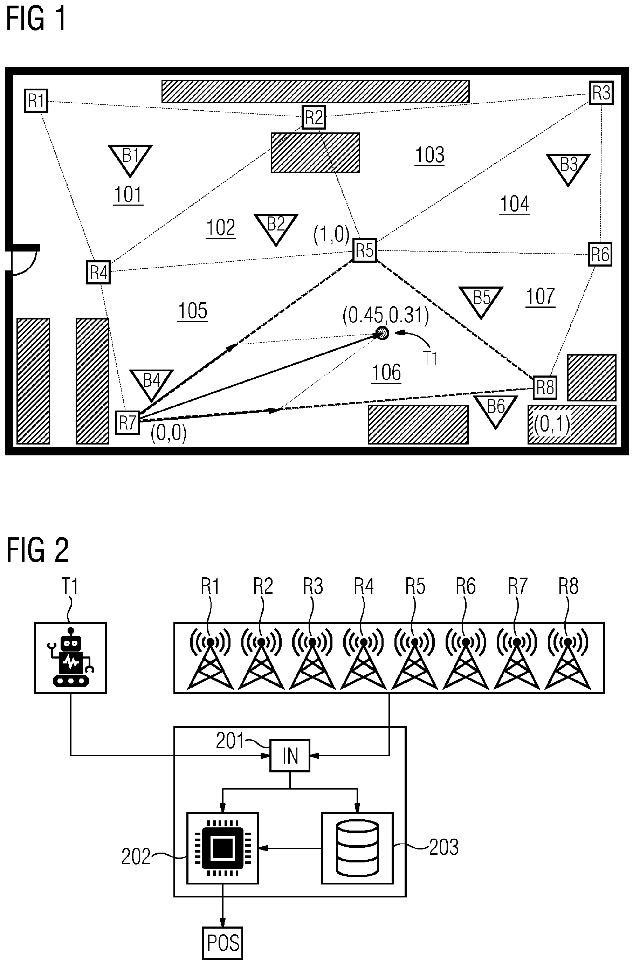

The locating system shown in Figure 1 is designed for locating at least one transponder T1 within a surveillance area 100, particularly an indoor area within e.g., a plant. The locating system comprises a plurality of beacons B1-B6, such as Bluetooth, UWB, WiFi or 5G access points, and receivers R1-R8 being located at known positions. The beacons B1-B6 are configured to transmit periodic radio signals, whereas the receivers R1-R8 are configured to measure a received signal strength indicator (RSSI) of the periodic signals from each beacon B1-B6. Moreover, the transponder T1 is also configured to perform a measurement of the RSSI of the periodic signals from each beacon B1-B6. Generally, the receivers may comprise stationary receivers and mobile equipment, respectively with known positions or moving, respectively along known trajectories. The transponder T1 may be implemented as a client having a Bluetooth, UWB, WiFi or 5G radio unit which is attached to e.g., an automatic guided vehicle (AGV).

The surveillance area 100 is divided into a plurality of triangle sections 101-107, wherein the receivers R1-R8 are located at respective corners of the triangle sections 101-107. For an efficient calculation of the position of the transponder T1 as will be explained more in detail later, the positions of the receivers R1-R8 and the position of the transponder T1 are expressed by means of barycentric coordinates. According to the example shown in Figure 1, the receiver R7 associated with the triangle section 106 has the barycentric coordinates (0, 0), whereas the other two receivers R5 and R8 associated with this triangle section have the barycentric coordinates (1, 0) and (0, 1), respectively. The transponder T1 is assumed to be also located within the triangle section 107 and to have the barycentric coordinates (0.45, 0.31) as illustrated in the example according to Figure 1.

Additionally, the locating system comprises a processing unit 200 which is in connection with the receivers R1-R8 on the one hand and the transponder T1 on the other hand as shown in Figure 2. Above RSSI measurements carried out by the receivers R1-R8 and the transponder T1 are provided to an input component 201 of the processing unit 200 and then passed to a CPU component 202 and to an RSSI database 203. The receivers R1-R8 periodically update their respective RSSI measurements. These updates are stored in the RSSI database 203 accordingly to be retrieved by the CPU component 202 for determining the position of the transponder T1. According to the present exemplary embodiment, the processing unit 200 also performs the step of dividing the surveillance area 100 into the triangle sections 101-107 based on the positions of the receivers R1-R8. The processing unit 200 can be a component of the transponder 200 or may be implemented as a separate, dedicated unit, especially constituting a central unit of the locating system.

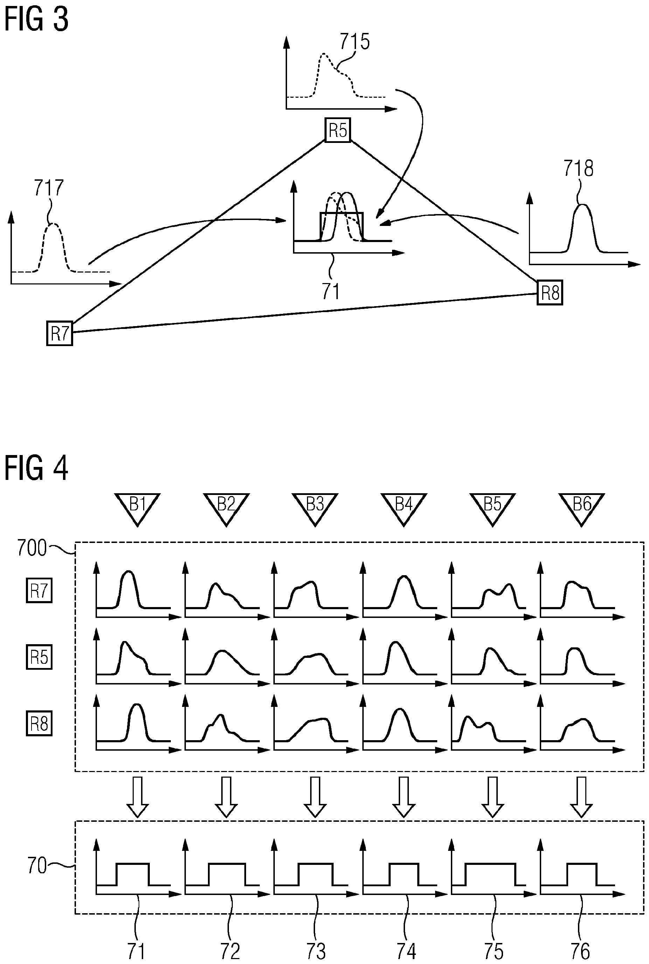

By means of the CPU component 202, the processing unit 200 calculates and updates, for each beacon B1-B6, a probability density function (PDF) of the RSSIs measured by each receiver R1-R8. The PDFs are calculated for each receiver R1-R8 and each beacon B1-B6. Particularly, the PDFs associated with the positions of the receivers R1-R8 are interpolated within the triangle sections 101-107 using barycentric interpolation to provide for a PDF for any point within the triangle sections 101-107. As illustrated by means of Figure 3 with respect to beacon B1 and the triangle section 107, the processing unit 200 is configured for determining, from the PDFs 717, 715, 718, a confidence interval 71 of the RSSIs within the triangle section 107 for the beacon B1. The confidence interval 71 is determined by the processing unit 200 considering each receiver R7, R5, R8 in the triangle section 107 and comprises a minimum and maximum RSSI value over all receivers R7, R5, R8 in the triangle section 107 as to the beacon B1. This is done within each triangle section 101-107 for each of the beacons B1-B6 accordingly.

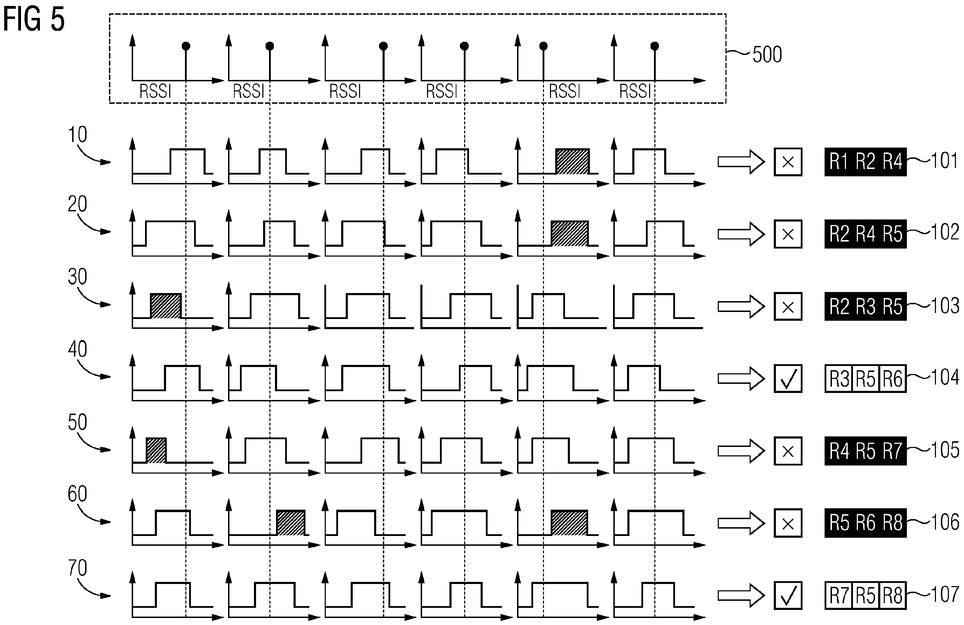

Based on the PDFs 700, an RSSI signature 70 is calculated by the processing unit 200 for the triangle section 107 from the confidence intervals 71-76 for each beacon B1-B6 and for each receiver R7, R5, R8 associated with the triangle section 107 as shown in Figure 4. The RSSI signature 70 is a barycentric signature calculated for the triangle section 107 from the PDFs 717, 715, 718 of the RSSIs measured by the receivers R7, R5, R8 at the corners of the triangle section 107. Such an RSSI signature 10, 20, 30, 40, 50, 60, 70 is calculated for each triangle section 101-107 (see Figure 5).

Moreover, the processing unit 200 is configured for generating an RSSI fingerprint 500 from the RSSI measurements of the transponder T1 to be located and comparing the RSSI fingerprint 500 to the RSSI signatures 10, 20, 30, 40, 50, 60, 70 of the triangle sections 101-107. Particularly, the RSSI fingerprint 500 is generated by the processing unit 200 from the RSSIs measured by the transponder T1 for each beacon B1-B6. According to Figure 5, the processing unit 200 selects the triangle sections 104, 107 having an RSSI signature 40, 70 matching to the RSSI fingerprint 500. The selected triangle sections 104, 107 constitute candidate areas where the transponder T1 is likely to be located.

Further, the processing unit 200 determines, within each selected triangle section 104, 107, a candidate position where the transponder T1 is most likely to be located according to the RSSI measurements of the transponder T1 and the respective PDFs. Thus, the processing unit 200 determines one candidate position per candidate area. Finally, the processing unit 200 is configured for determining, from the candidate positions, a position having a maximum match between the RSSI measurements of the transponder T1 and the PDFs.

The method of locating the transponder T1 within the surveillance area 100 will be described in a more detailed manner hereinafter. According to the scenario shown in Figure 1, the present exemplary embodiments is based on a setup of *B=6* beacons B1-B6 and *R=8* stationary or fixed receivers R1-R8. The RSSI fingerprint generated from the RSSI measurements of the transponder to be located results into an array of *B* received RSSIs. Because of radio propagation properties, for example due to obstacles, within the surveillance area, some of the RSSI measurements may be missing, if a respective received radio power is below a sensitivity threshold of the respective receiver or transponder.

When the PDFs of the RSSI measurements at known locations for all receivers or transmitters are available, naive Bayes classification is an accurate approach to assign a RSSI fingerprint onto one of these locations. This classification technique works by calculating a joint probability of obtaining all measured RSSI values in the fingerprint for all known RSSI distributions in all known locations. Usually, it may be not possible to have true PDFs of measurable RSSI values for all points in space. An approximate solution to this problem is to measure PDFs at discrete points and use them to interpolate the PDF at desired locations, for example by using said barycentric interpolation. Then, global optimization approaches can be used to find the point with the highest probability of having generated a given RSSI fingerprint. Generally, this would be a computationally intensive task, if above optimization approaches would include all triangle sections, since the interpolation would have to be performed for a large number of unknown points.

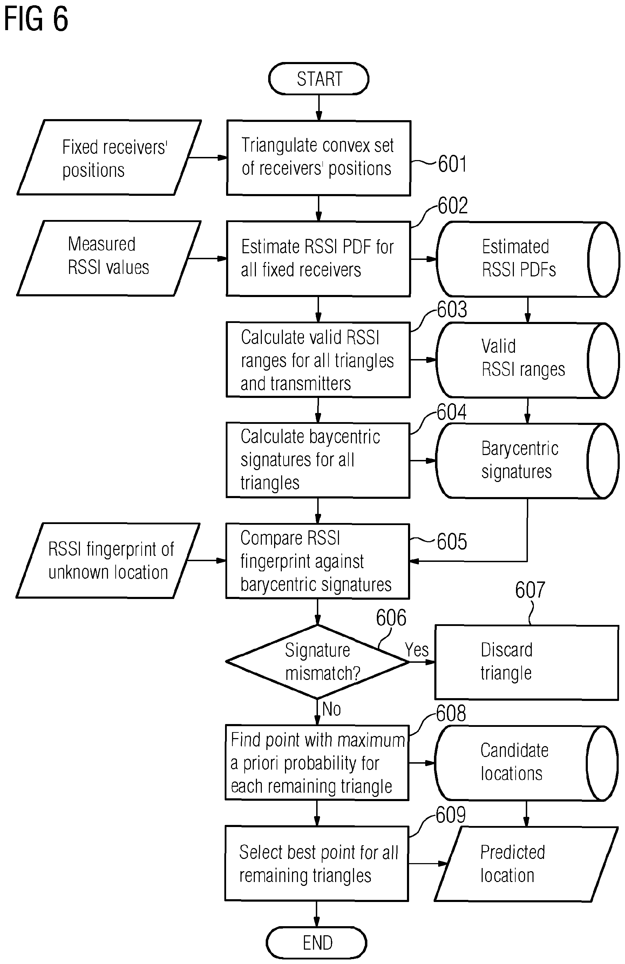

The present approach for locating a transponder within a surveillance area provides for an improved efficiency of finding the highly probable points by checking RSSI fingerprints against said barycentric signatures, which can be used to discard a large portion of the surveillance area before running an optimization algorithm. The main functional steps are summarized hereinafter and illustrated by means of Figure 6.

1. A region delimited by a convex hull of a set of fixed receivers, henceforth referred as *interior region,* is divided into non-overlapping triangular regions, in a process known as *triangulation* (step 601). Multiple techniques exist to produce this triangulation, such as *Delaunay triangulation.* The resulting triangulation can be, for convenience, modelled as a *triangulation matrix* $\mathbf{T} = [t_{i,j}]$ of dimension $T \times 3$, where $T$ is the number of resulting triangles. The elements in row $i$ of matrix $\mathbf{T}$ denote the indices of the fixed receivers in the corners of the triangle $i$. For example, the triangulation matrix in the scenario of **Fehler! Verweisquelle konnte nicht gefunden werden.** is:

$$\mathbf{T} = \begin{bmatrix} 1 & 2 & 4 \\ 2 & 4 & 5 \\ 2 & 3 & 5 \\ 3 & 5 & 6 \\ 4 & 5 & 7 \\ 5 & 6 & 8 \\ 7 & 5 & 8 \end{bmatrix}$$

The location of point within a triangle $i$ in the interior region can be expressed by means of its *barycentric coordinates* with respect of one of the triangle corners, i.e. corresponding to the location of one of the fixed receivers. These barycentric coordinates for an arbitrary point are henceforth referred to as $(\alpha, \beta)$. These coordinates fulfill the properties $\alpha \leq 1$, $\beta \leq 1$, and $\alpha + \beta \leq 1$ for all points within the triangle, such that the points (0,0), (0,1), and (1,0) correspond to the fixed receivers in the corners of the triangle. This is depicted in **Fehler! Verweisquelle konnte nicht gefunden werden..**

2. Each fixed receiver $r$ listens to periodic pilot signals sent by radio transmitter $b$ and produces an updated estimate of the PDF of their RSSIs $X_{b,r}$ denoted as $\hat{f}_{Xb,r}(x)$ (step 602). There are multiple state-of-the-art approaches to perform this estimation, such as *kernel density estimation,* or *distribution fitting.* From this PDF, its corresponding quantile function $\hat{Q}^{b,r}(p)$ for a given probability $p$ can be also straightforwardly calculated.

3. After choosing an appropriate confidence level $\varepsilon$, a *valid RSSI interval* $V_{b,i}$ is defined for each transmitter $b$ and triangle $i$ as (step 603):

$$V_{b,i} = \left(\min\left\{ \hat{Q}^{b,t_{i,1}}(1-\epsilon), \hat{Q}^{b,t_{i,2}}(1-\epsilon), \hat{Q}^{b,t_{i,3}}(1-\epsilon)\right\}, \max\left\{ \hat{Q}^{b,t_{i,1}}(\epsilon), \hat{Q}^{b,t_{i,2}}(\epsilon), \hat{Q}^{b,t_{i,3}}(\epsilon)\right\}\right).$$

This interval contains all RSSI values that can be achieved with a probability higher or equal than $\varepsilon$ by any interpolated PDF of RSSIs resulting from the barycentric interpolation of the estimated PDFs at the fixed receivers (see also Figure 3)**Fehler! Verweisquelle konnte nicht gefunden warden..**

4. The valid RSSI ranges are collected for all transmitters of a given rectangle $i$ (step 604) and will be summarized within the *barycentric signature* $S_i = \langle V_{1,i}, ..., V_{B,i}\rangle$ of that triangle, since it can be used to rule out the possibility that a given set of RSSI values was measured within that triangle (see also Figure 4).

5. A device in an unknown location measures the set of RSSI values from all the transmitters and collects the *RSSI fingerprint* $H = \langle h_1, ..., h_b, ..., h_B\rangle$, where $h_b$ is the RSSI value received from transmitter $b$, and reports it to the processing unit.

6. The processing unit compares the RSSI fingerprint $H$ with the barycentric signatures of all triangles (step 605). If signature mismatch occurs (step 606), wherein any value $h_b$ of the fingerprint is outside the valid RSSI range $V_{b,i}$, triangle $i$ is discarded (step 607) and ignored for the subsequent steps (see also Figure 5), which saves computational effort and may help increasing the positioning accuracy.

7. For each remaining triangle $i \in \mathbb{Y}$, where $\mathbb{Y}$ is the set of remaining triangle indices, the PDF $\hat{f}_{Xb}(x ; l)$ of the RSSI values $X_b$ measured at location $l = (\alpha, \beta)$ from transmitter $b$ can be calculated as an interpolated combination of the distribution of $X_b$ at the corners $t_{i,1}$, $t_{i,2}$, and $t_{i,3}$ of the triangle using its barycentric coordinates, i.e. barycentric interpolation. The simplest interpolation would have the following form:

$$\hat{f}_{X_b}(x ; l) = \alpha\hat{f}_{X_{b,t_{i,1}}}(x) + \beta\hat{f}_{X_{b,t_{i,2}}}(x) + (1 - \alpha - \beta)\hat{f}_{X_{b,t_{i,3}}}(x).$$

Using a more elaborated interpolation that continuously shifts the means of the interpolation elements to get a smoother interpolation yields:

$$\hat{f}_{X_b}(x ; l) = \alpha\hat{f}_{X_{b,t_{i,1}}}\left(x - \beta(\mu_{b,t_{i,2}} - \mu_{b,t_{i,1}}) - (1 - \alpha - \beta)(\mu_{b,t_{i,3}} - \mu_{b,t_{i,1}})\right)$$

$$+ \beta\hat{f}_{X_{b,t_{i,2}}}\left(x - \alpha(\mu_{b,t_{i,1}} - \mu_{b,t_{i,2}}) - (1 - \alpha - \beta)(\mu_{b,t_{i,3}} - \mu_{b,t_{i,2}})\right)$$

$$+ (1 - \alpha - \beta)\hat{f}_{X_{b,t_{i,3}}}\left(x - \alpha(\mu_{b,t_{i,1}} - \mu_{b,t_{i,3}}) - \beta(\mu_{b,t_{i,2}} - \mu_{b,t_{i,3}})\right),$$

where $\mu_{b,r}$ is the mean of $X_{b,r}$ measured at the receiver $r$.

8. At this point, $\hat{f}_{Xb}(x\,;l)$ and a collection of triangles where the RSSI fingerprint could have been measured can be computed. In order to find the most likely location where the RSSI fingerprint was measured, the naive joint probability of obtaining such a fingerprint can be maximized for each possible triangle which is similar to the known naive Bayes classification. This implies maximizing the product of probability densities for each possible triangle $i$ (step 608):

$$l_i^* = \arg\max_{l \in \mathbb{T}_i} \prod_{b=1}^{B} \hat{f}_{X_b}(x_b; l).$$

There are multiple global or local optimization approaches to obtain (near-)optimal solutions to the above problem, such as gradient-descent methods, evolutionary algorithms, particle swarm optimization, simulated annealing, etc.

9. Finally, the most likely location is selected as the location whose a priori probability is highest for all remaining triangles $\mathbb{T}_i$ (step 609).

**Claims**

1. A method of locating at least one transponder within a surveillance area of a locating system, wherein the locating system comprises a plurality of beacons and receivers being located at known positions, the method comprising the steps of:

   - measuring, by each receiver (R1-R8), a signal strength of periodic signals from each beacon (B1-B6) and calculating, for each beacon, a probability density function (700, 715, 717, 718) of the signal strength measured by the receiver;
   - dividing the surveillance area (100) into a plurality of polygon sections (101-107), the receivers being located at respective corners of the polygon sections;
   - determining, from the probability density functions, a confidence interval (71-76) of the signal strength within each section for each beacon and calculating, from the confidence intervals, a signal strength signature (10, 20, 30, 40, 50, 60, 70) for each section;
   - performing, by a transponder (T1) to be located, a measurement of the signal strength of the periodic signals from each beacon;
   - generating, from the measurements of the transponder, a signal strength fingerprint (500) and selecting the sections (104, 107) having a signal strength signature (40, 70) matching to the signal strength fingerprint;
   - determining, within each selected section, a candidate position where the transponder is most likely to be located according to the measurements of the transponder and the respective probability density functions; and
   - determining, from the candidate positions, a position having a maximum match between the measurements of the transponder and the probability density functions.

2. The method according to claim 1,

   wherein the polygon sections (101-107) are triangles, and
   wherein the signal strength signatures (10, 20, 30, 40, 50, 60, 70) are barycentric signatures calculated for each triangle from the probability density functions of the signal strength measured by the respective receivers (R1-R8) at each corner of the triangles.

3. The method according to claim 2,
   wherein the probability density functions (700, 715, 717, 718) are calculated for each receiver (R1-R8) and each beacon (B1-B6), and wherein the probability density functions associated with the positions of the receivers are interpolated within the triangles using barycentric interpolation.

4. The method according to one of the claims 1 to 3,
   wherein the receivers (R1-R8) periodically update their respective measurements of the signal strength of the periodic signals from the beacons (B1-B6).

5. The method according to one of the claims 1 to 4,
   wherein the receivers comprise stationary receivers and/or mobile equipment with known positions and/or moving along known trajectories.

6. The method according to one of the claims 1 to 5,
   wherein the probability density functions (700, 715, 717, 718) are calculated and updated by a processing unit (200).

7. The method according to claim 6,
   wherein the confidence interval (71-76) of the signal strength within each section (101-107) is determined by the processing unit (200) considering each receiver (R1-R8) in the respective section, and wherein the confidence interval comprises a minimum value and a maximum value of the signal strength over all receivers in the respective section.

8. The method according to one of the claims 6 or 7,
   wherein the surveillance area (100) is divided into the plurality of polygon sections (101-107) by the processing unit (200) based on the positions of the receivers (R1-R8).

9. The method according to one of the claims 6 to 8,
   wherein the signal strength fingerprint (500) is generated by the processing unit (200) from the signal strength measured for each beacon (B1-B6) by the transponder (T1).

10. The method according to one of the claims 6 to 9,
    wherein the sections (104, 107) having a signal strength signature (40, 70) matching to the signal strength fingerprint (500) are selected by the processing unit (200), wherein the selected sections are candidate areas where the transponder (T1) is likely to be located, and wherein the candidate positions are determined by the processing unit according to the measurements of the transponder for each beacon and the respective probability density functions.

11. The method according to claim 10,
    wherein the processing unit determines one candidate position per candidate area.

12. A locating system for locating at least one transponder within a surveillance area, the locating system comprising a plurality of beacons (B1-B6) and receivers (R1-R8) being located at known positions, wherein the beacons are configured to transmit periodic signals, wherein the receivers are configured to measure a signal strength of the periodic signals from each beacon, and wherein the transponder (T1) is configured to perform a measurement of the signal strength of the periodic signals from each beacon, the locating system further comprising means for

    - calculating, for each beacon (B1-B6), a probability density function (700, 715, 717, 718) of the signal strength measured by the respective receiver (R1-R8);
    - dividing the surveillance area (100) into a plurality of polygon sections (101-107), the receivers being located at respective corners of the polygon sections;
    - determining, from the probability density functions, a confidence interval (71-76) of the signal strength within each section for each beacon and calculating, from the confidence intervals, a signal strength signature (10, 20, 30, 40, 50, 60, 70) for each section;
    - generating, from the measurements of the transponder, a signal strength fingerprint (500) and selecting the sections (104, 107) having a signal strength signature (40, 70) matching to the signal strength fingerprint;
    - determining, within each selected section, a candidate position where the transponder is most likely to be located according to the measurements of the transponder and the respective probability density functions; and
    - determining, from the candidate positions, a position having a maximum match between the measurements of the transponder and the probability density functions.

13. A processing unit for a locating system according to claim 12, the processing unit being configured for

    - calculating, for each beacon (B1-B6) of the locating system transmitting periodic signals, a probability density function (700, 715, 717, 718) of a signal strength of the periodic signals measured by each receiver (R1-R8) of the locating system being located at a known position;
    - dividing a surveillance area (100) into a plurality of polygon sections (101-107), the receivers being located at respective corners of the polygon sections;
    - determining, from the probability density functions, a confidence interval (71-76) of the signal strength within each section for each beacon and calculating, from the confidence intervals, a signal strength signature (10, 20, 30, 40, 50, 60, 70) for each section;

- generating, from measurements of the signal strength of the periodic signals from each beacon performed by a transponder to be located, a signal strength fingerprint (500) and selecting the sections (104, 107) having a signal strength signature (40, 70) matching to the signal strength fingerprint;

- determining, within each selected section, a candidate position where the transponder is most likely to be located according to the measurements of the transponder and the respective probability density functions; and

- determining, from the candidate positions, a position having a maximum match between the measurements of the transponder and the probability density functions.

14. A mobile object including a processing unit according to claim 13 and a transponder configured to perform a measurement of a signal strength of periodic signals from each beacon within a locating system.

# FIG 1

# FIG 2

FIG 3

FIG 4

FIG 5

# FIG 6

START

Fixed receivers' positions → Triangulate convex set of receivers' positions ~601

Measured RSSI values → Estimate RSSI PDF for all fixed receivers ~602 → Estimated RSSI PDFs

Calculate valid RSSI ranges for all triangles and transmitters ~603 → Valid RSSI ranges

Calculate baycentric signatures for all triangles ~604 → Barycentric signatures

RSSI fingerprint of unknown location → Compare RSSI fingerprint against barycentric signatures ~605

Signature mismatch? 606 — Yes → Discard triangle 607

No

Find point with maximum a priori probability for each remaining triangle ~608 → Candidate locations

Select best point for all remaining triangles ~609 → Predicted location

END

Europäisches
Patentamt

European
Patent Office

Office européen
des brevets

# EUROPEAN SEARCH REPORT

Application Number

EP 23 16 3814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TALVITIE JUKKA ET AL: "Distance-Based Interpolation and Extrapolation Methods for RSS-Based Localization With Indoor Wireless Signals", IEEE TRANSACTIONS ON VEHICULAR TECHNOLOGY, IEEE, USA, vol. 64, no. 4, 1 April 2015 (2015-04-01), pages 1340-1353, XP011578362, ISSN: 0018-9545, DOI: 10.1109/TVT.2015.2397598 [retrieved on 2015-04-14] * abstract, p. 1341-1348, fig. 5 * ----- | 1-14 | INV. G01S5/02 |
| X | ALONAZI ABDULLAH ET AL: "Delaunay Triangulation Based Interpolation for Radio Map Construction with Reduced Calibration", 2017 9TH IEEE-GCC CONFERENCE AND EXHIBITION (GCCCE), IEEE, 8 May 2017 (2017-05-08), pages 1-9, XP033394932, DOI: 10.1109/IEEEGCC.2017.8448199 [retrieved on 2018-08-27] * abstract, p. 1-4 * ----- | 1-14 | |
| | | | **TECHNICAL FIELDS SEARCHED (IPC)** |
| | | | G01S |
| A | KAEMARUNGSI K ET AL: "Modeling of indoor positioning systems based on location fingerprinting", INFOCOM 2004. TWENTY-THIRD ANNUALJOINT CONFERENCE OF THE IEEE COMPUTER AND COMMUNICATIONS SOCIETIES, IEEE, PISCATAWAY, NJ, USA, vol. 2, 7 March 2004 (2004-03-07), pages 1012-1022, XP010740847, DOI: 10.1109/INFCOM.2004.1356988 ISBN: 978-0-7803-8355-5 * the whole document * ----- -/-- | 1-14 | |

The present search report has been drawn up for all claims

| Place of search | Date of completion of the search | Examiner |
|---|---|---|
| Munich | 29 September 2023 | González Moreno, J |

EPO FORM 1503 03.82 (P04C01)

Europäisches
Patentamt

European
Patent Office

Office européen
des brevets

**EUROPEAN SEARCH REPORT**

Application Number

EP 23 16 3814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VILLE HONKAVIRTA ET AL: "A comparative survey of WLAN location fingerprinting methods", POSITIONING, NAVIGATION AND COMMUNICATION, 2009. WPNC 2009. 6TH WORKSHOP ON, IEEE, PISCATAWAY, NJ, USA, 19 March 2009 (2009-03-19), pages 243-251, XP031452402, ISBN: 978-1-4244-3292-9 * the whole document * ----- | 1-14 | |

TECHNICAL FIELDS
SEARCHED      (IPC)

The present search report has been drawn up for all claims

| Place of search | Date of completion of the search | Examiner |
|---|---|---|
| Munich | 29 September 2023 | González Moreno, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22184622

**Non-patent literature cited in the description**

- **XUE, WEIXING et al.** Improved Wi-Fi RSSI measurement for indoor localization. *IEEE Sensors Journal,* 2017, vol. 17 (7), 2224-2230

- **HOANG, MINH TU et al.** Recurrent neural networks for accurate RSSI indoor localization. *IEEE Internet of Things Journal,* 2019, vol. 6 (6), 10639-10651